# EUROPÄISCHE PATENTSCHRIFT

(11) **EP 3 649 367 B1**
(45) Veröffentlichungstag und Bekanntmachung des Hinweises auf die Patenterteilung: **20.03.2024**
(21) Anmeldenummer: 18734503.8
(22) Anmeldetag: 21.06.2018
(51) Int. Cl.: F16F 9/34, F16F 9/46, F16F 9/348, F16F 9/516, F16K 15/04, F16K 15/06

(54) **DÄMPFVENTIL FÜR EINEN SCHWINGUNGSDÄMPFER**
DAMPING VALVE FOR A VIBRATION DAMPER
SOUPAPE D'AMORTISSEMENT POUR AMORTISSEUR DE VIBRATION

(30) Priorität: 07.07.2017 DE 102017211614
(43) Veröffentlichungstag der Anmeldung: 13.05.2020
(73) Patentinhaber: ZF Friedrichshafen AG, 88046 Friedrichshafen (DE)
(72) Erfinder: BECK, Holger, 53783 Eitorf (DE); SCHMITZ, Klaus, 53783 Eitorf (DE); KAPELL, Sven, 53783Eitorf (DE)
(74) Vertreter: ZF Friedrichshafen AG
(86) Internationale Anmeldenummer: PCT/EP2018/066501
(87) Internationale Veröffentlichungsnummer: WO 2019/007689

(56) Entgegenhaltungen:
- DE-B- 1 044 537
- FR-A1- 2 301 737
- GB-A- 570 813
- US-A- 2 695 034
- US-A- 4 216 570
- US-A- 4 650 043
- US-A- 4 823 922
- US-A1- 2015 211 655
- US-B2- 8 256 738

## Beschreibung

Die Erfindung betrifft ein Dämpfventil für einen Schwingungsdämpfer gemäß dem Oberbegriff von Patentanspruch 1.

Aus der DE 10 2015 212 535 A1 ist ein Dämpfventil für einen Schwingungsdämpfer bekannt, bei dem ein Dämpfventilkörper einen Strömungskanal aufweist, in dem eine Zugstange angeordnet ist. Die Zugstange trägt eine Ventilscheibe, die gegen eine Ventilsitzfläche des Dämpfventilkörpers vorgespannt wird. Für jede Durchströmungsrichtung wird mindestens ein Strömungskanal mit der Ventilscheibe eingesetzt. Zusätzlich kann ein Einströmkanal für eine erste Durchströmungsrichtung mit einem Rückschlagventil bestückt sein, dass einen minimalen Durchlassquerschnitt offenhält, der auch Voröffnungsquerschnitt genannt wird. Bei einigen Verwendungszwecken des Schwingungsdämpfers muss für jeweils eine Durchströmungsrichtung ein Voröffnungsquerschnitt vorliegen, der sich von dem Voröffnungsquerschnitt der anderen Durchströmungsrichtung unterscheidet. Folglich sind in dem Dämpfventilkörper zwei Strömungskanäle für zwei Rückschlagventile angeordnet. Die dafür verwendeten Rückschlagventile, in der Fachwelt auch als "Lee-Ventil" bekannt, sind jedoch vergleichsweise teuer.

Aus der US 4 216 570 A ist ein Dämpfventil für zwei Durchströmungsrichtungen bekannt. Eine Ventilstange innerhalb eines Ventilkörpers bildet mit einem umlaufenden Kragen in Verbindung mit einer Ventilsitzfläche am Ventilkörper ein Dämpfventil für eine erste Strömungsrichtung, das in der Ausgangsstellung vollständig geschlossen ist. Das Dämpfmedium strömt bei geöffnetem Dämpfventil außenseitig an der Ventilstange vorbei. Räumlich innerhalb der Ventilstange verläuft ein Kanal, der in Verbindung mit einer Schließkugel und einer Schließfeder ein Dämpfventil für eine zwei Strömungsrichtung darstellt. Hydraulisch parallel geschaltet zu beiden Dämpfventilen ist ein permanent geöffneter Voröffnungsquerschnitt, der von einer einfachen Drosselbohrung gebildet wird.

Auch in der US 4 650 043 wird eine Ventilstange mit einem umlaufenden Kragen verwendet, der auf einer Ventilsitzfläche eines Ventilköpers aufsitzt. Das Dämpfmedium fließt innerhalb des Ventilgrundkörpers durch eine zentrale Bohrung, die mit dem Ventilstange einen ringförmigen Strömungsquerschnitt bildet. Für eine zweite Durchströmungsrichtung steht ein separates Dämpfventil mit einem axialen Strömungskanal innerhalb des Ventilkörpers zur Verfügung.

Die Aufgabe der vorliegenden Erfindung besteht darin, für das Dämpfventil einen von der Durchströmungsrichtung des Dämpfmediums abhängigen Voröffnungsquerschnitt bereitzustellen.

Die Aufgabe wird durch die Merkmale des Patentanspruchs 1 gelöst,

Der Vorteil besteht darin, dass die verwendeten Bauteile einerseits sehr einfach sind und andererseits leicht montierbar und an eine beliebige Kennlinie anpassbar sind. Aufgrund des Wechselventil-Prinzips wird nur ein Strömungskanal für zwei wirksame Strömungsquerschnitte benötigt. Folglich kann im Vergleich zum bekannten Stand der Technik der Bauraum für einen Strömungskanal eingespart werden.

Im Hinblick auf eine einfache Montage ist die Ventilstange axial teilbar ausgeführt, so dass jeweils Ventilstangen mit einteiligem Ventilstangenkopf verwendet werden können.

Gemäß einem vorteilhaften Unteranspruch sind die Ventilstangen mittels einer Verbindungshülse miteinander verbunden. Auch diese Maßnahme dient der Vereinfachung der Ventilbauteile.

Für eine einfache Schraubmontage ist die Verbindungshülse innerhalb des Strömungskanals fixiert. Die Fixierung ist keinesfalls dauerhaft sein, sondern nur für den Montagevorgang.

Bei einer bevorzugten Ausführung sind die Ventilstangen über eine Gewindeverbindung miteinander verbunden. Folglich sollte die Verbindungshülse solange ihre Position im Gehäuse halten, bis die Gewindeverbindungen in der Verbindungshülse gegriffen haben. Danach wäre die Fixierung gänzlich überflüssig.

Alternativ können die Ventilstangen über eine Presspassung miteinander verbunden sein. Dann besteht kein Anlass über eine Gewindesicherung nachzudenken.

Optional wird die Ventilstange von einer Federanordnung in eine Ausgangsstellung zu den beiden Ventilsitzfläche positioniert. Damit kann eine Vorzugsbetriebsposition eingestellt werden.

Anhand der folgenden Figurenbeschreibung soll die Erfindung näher erläutert werden.

Es zeigt:
- Fig. 1: Schnittdarstellung durch das Dämpfventil
- Fig. 2: Draufsicht mit Höhenschnitt durch Einzelventile
- Fig. 3: Detaildarstellung zur Fig. 1
- Fig. 4: Mehrteilige Ventilstange als Einzelteil

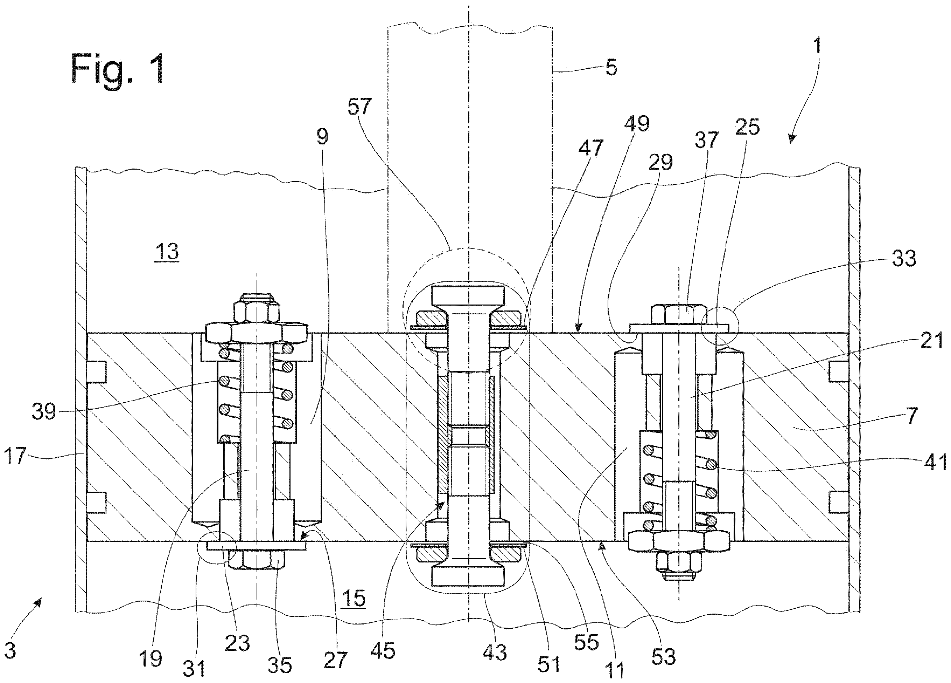

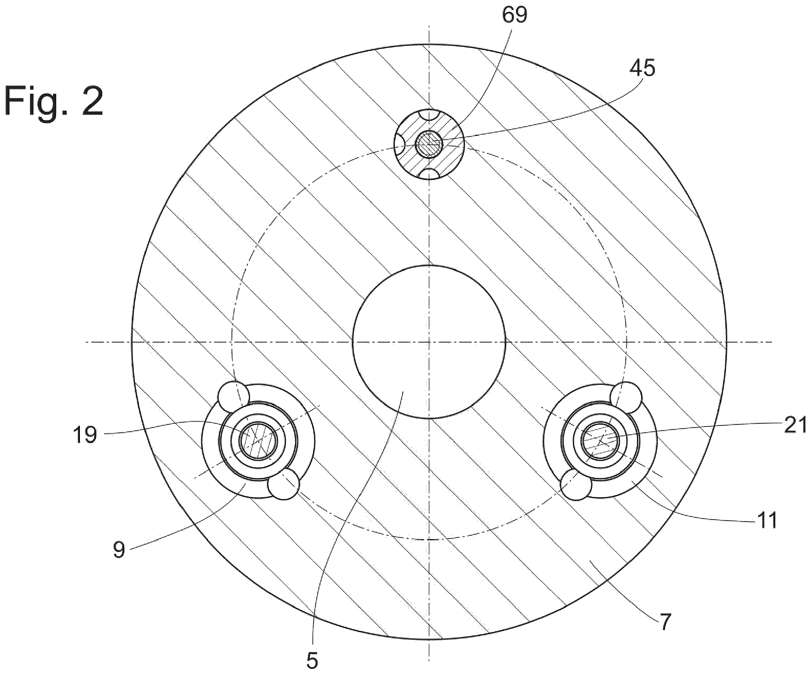

Die Fig. 1 zeigt ein Dämpfventil 1 innerhalb eines Schwingungsdämpfers 3 in der Bauform eines Kolbenventils an einer Kolbenstange 5, die nur gestrichelt dargestellt ist, da die dargestellte Schnittebene radial außerhalb der Kolbenstange 5 verläuft. Das Dämpfventil 1 umfasst einen Dämpfventilkörper 7 im weiteren Kolben genannt, mit mindestens einem Strömungskanal 9; 11 für ein Dämpfmedium in einem kolbenstangenseitigen und einem kolbenstangenfernen Arbeitsraum 13; 15 innerhalb eines Zylinders 17. Der Kolben 7 kann sich zusammen mit der Kolbenstange 5 axial innerhalb des Zylinders 17 verschieben. In diesem Ausführungsbeispiel ist für beide Strömungsrichtungen zwischen den beiden Arbeitsräumen 13; 15 jeweils ein Strömungskanal 9; 11 ausgeführt, wie in der Zusammenschau mit der Fig. 2 erkennbar ist. Grundsätzlich können natürlich auch mehrere Strömungskanäle 9; 11 pro Strömungsrichtung vorgesehen werden.

In jedem Strömungskanal 9; 11 ist eine Ventilstange 19; 21 angeordnet, die mit einer Ventilscheibe 23; 25 und einer Ventilsitzfläche 27; 29 zusammenwirkt und damit ein Hauptdämpfventil 31; 33 innerhalb des Dämpfventils 1 für eine Durchströmungsrichtung bildet.

Bei einer Anströmung des Dämpfmediums ausgehend von einem Arbeitsraum 13; 15 fließt das Dämpfmedium über das offene Ende des Strömungskanals 9; 11 in Richtung der Ventilscheibe 23; 25. Der innerhalb des Strömungskanals 9; 11 wirksame Druck übt eine Abhubkraft auf die Ventilscheibe 23; 25 aus, die über einen Kopf 35; 37 der Ventilstange 19; 21 auf diese übertragen wird. Die Ventilscheibe 23; 25 kann von der Ventilsitzfläche 27; 29 abheben. Dabei führt die Ventilstange 19; 21 eine Verschiebebewegung aus. Eine Schließfeder 39; 41 übt auf die Ventilstange 19; 21 eine Zugkraft aus, die der Abhubkraft des Betriebsdrucks im Strömungskanal 9; 11 entgegenwirkt.

Neben den beiden Hauptdämpfventilen 31; 33, die beide einen konstruktiv identischen Aufbau aufweisen, aber im Detail, z. B. den Federparametern abweichen können, verfügt das Dämpfventil 1 über ein Voröffnungsventil 43. Das Voröffnungsventil 43 umfasst ebenfalls eine Ventilstange 45, die an einem ersten Ende eine erste Ventilscheibe 47 für eine erste Ventilsitzfläche 49 und am anderen Ende eine weitere Ventilscheibe 51 trägt, die mit einer zweiten Ventilsitzfläche 53 zusammenwirkt. Die Ventilsitzflächen 27 und 53 bzw. 29; 49 können identisch sein, müssen es aber nicht. Der Abstand zwischen der ersten und der weiteren Ventilscheibe 47; 51 ist größer als der Abstand der ersten und der zweiten Ventilsitzfläche 49; 53. Folglich kann sich die Ventilstange mit den beiden Ventilscheibe in Grenzen axial relativ zum Dämpfventilkörper verschieben, da ein Anfangsspalt 55 vorliegt.

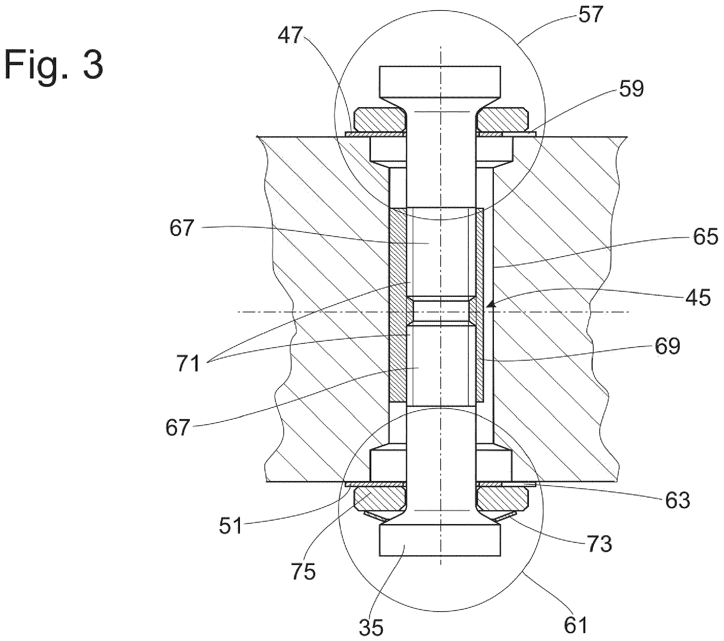

Die erste Ventilscheibe 47 bildet mit der ersten Ventilsitzfläche 49 dabei ein erstes Teilventil 57 mit einem ersten permanent offenen Voröffnungsquerschnitt 59 und die zweite Ventilscheibe 51 mit der zweiten Ventilsitzfläche 53 bildet ein zweites Teilventil 61 mit einem zweiten Voröffnungsquerschnitt 63 (s. Fig. 3). Mit der Verschiebebewegung der Ventilstange 45 stellen die beiden Teilventile 57; 61 ein Wechselventil dar, das in Abhängigkeit der Durchströmungsrichtung mindestens eines dritten Strömungskanals 65 ein Teilventil 57; 61 öffnet und das andere Teilventil 57; 61 schließt. Die beiden Voröffnungsquerschnitte 59; 63 sind unterschiedlich groß und können durch eine Aussparung in der Ventilscheibe 47; 51 oder durch eine Aussparung in der Ventilsitzfläche 49; 53 erzeugt werden. Der Abstand zwischen den Ventilscheiben 47; 51 ist so groß, dass Dämpfmedium aus einem der Arbeitsräume 13; 15 durch den Voröffnungsquerschnitt der jeweils anliegenden Ventilscheibe 47; 53 in den in den angrenzenden Arbeitsraum ausströmen kann. Dabei wird der Drosselwiderstand von der auf der Ventilsitzfläche aufsitzenden Ventilscheibe bestimmt. Folglich liegen zwei richtungsabhängige Voröffnungsquerschnitte 59; 63 vor, die sich nicht gegenseitig beeinflussen. Die Druckverhältnisse an den Ventilscheiben 47; 51 bewirken die für die Ventilstange 45 notwendigen Verschiebekräfte. In Einströmungsrichtung in den Strömungskanal 65 sorgt eine Druckkraft für eine Schließbewegung der Ventilscheibe und damit für das Wirksamwerden des Voröffnungsquerschnitts. An der Austrittsseite des Dämpfmediums wirkt auf die andere Ventilscheibe ebenfalls eine Druckkraft in Richtung des anderen Arbeitsraums, der für die Ventilstange jedoch eine zusätzliche Zugkraft darstellt.

Die Ventilstange 45 ist axial teilbar ausgeführt. Dazu sind zwei einzelne Ventilstange 67 mittels einer Verbindungshülse 69 miteinander verbunden. Für den Montagevorgang ist die Verbindungshülse 69 innerhalb des Strömungskanals fixiert, z. B. durch einen Klebepunkt oder durch eine Verdrehsicherung der Verbindungshülse 69 innerhalb des Strömungskanals 65. Eine Verdrehsicherung ist insbesondere dann sinnvoll, wenn die Einzelventilstangen 67 über eine Gewindeverbindung 71 miteinander verbunden sind.

Grundsätzlich öffnen die beiden Hauptdämpfventile 31; 33 erst dann, wenn der Druck an den Voröffnungsquerschnitten 59; 63 ein definiertes Niveau erreicht hat und der Volumenstrom des verdrängten Dämpfmediums für die Voröffnungsquerschnitte 59; 63 zu groß ist.

In der Ausführung nach Figur 3 wird die Ventilstange 45 von einer Federanordnung 73 in eine Ausgangsstellung zu den beiden Ventilsitzflächen 49; 53 positioniert. Dazu wird z. B. eine Scheibenfeder 73 zwischen dem Kopf 35; 37 der Ventilstange 45 und einer der Ventilscheiben 47; 51 eingelegt. In dem vorliegenden Beispiel wird noch eine Stützscheibe 75 verwendet. Die Scheibenfeder 73 spannt die Ventilstange 45 in eine Ausgangsstellung vor. Die axiale Beweglichkeit der Ventilstange 45 ist jedoch weiterhin gegeben. Vielmehr wird durch die Federanordnung nur eine definierte Ausgangsstellung vorgegeben.

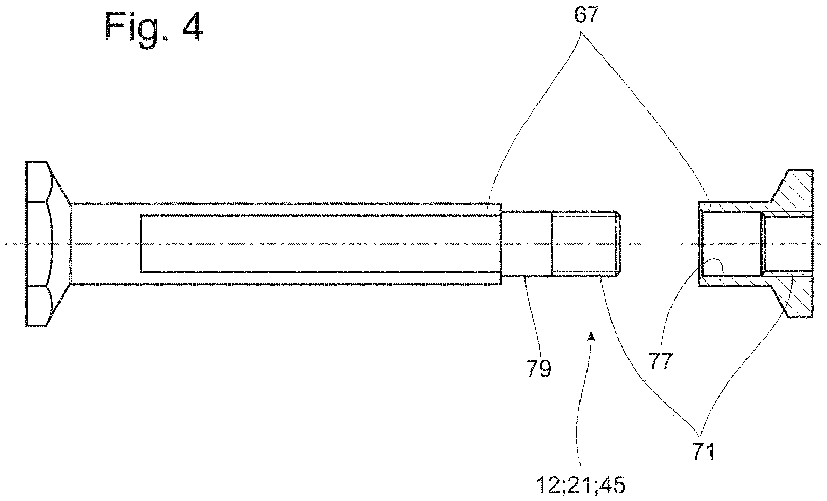

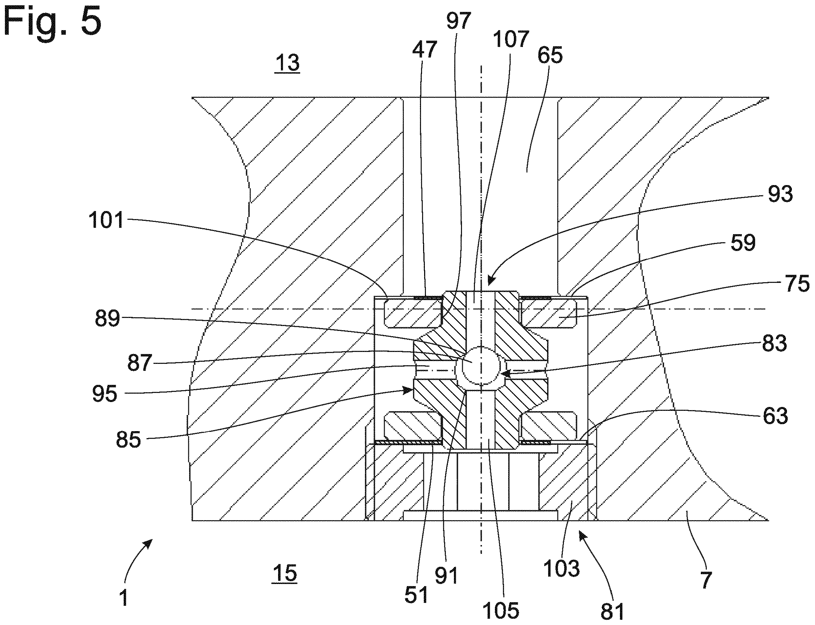

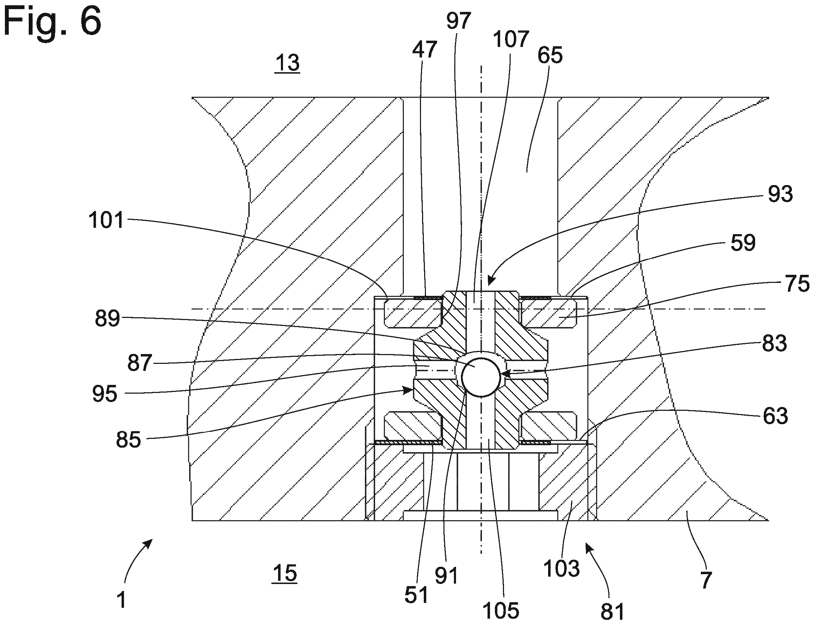

Mit der Fig. 4 soll beispielhaft erklärt werden, wie die Ventilstangen 19; 21; 45 über eine Presspassung miteinander verbunden sein können. Dazu verfügt die eine Einzelventilstange 67 über eine Aufnahmeöffnung 77 und die andere Ventilstange über einen Bolzenabschnitt 79. Der Bolzenabschnitt 79 und die Aufnahmeöffnungen 77 bilden die Presspassung. In diesem konkreten Beispiel wird zusätzlich eine Gewindeverbindung 71 zwischen den beiden Einzelventilstangen 71 genutzt, um die Presspassung zu schließen. Andererseits sorgt die Presspassung im Zusammenwirken mit der Gewindeverbindung für eine Sicherungsfunktion gegen ein ungewolltes Lösen der Gewindeverbindung 71.

### Bezugszeichen

| | | | |
|---|---|---|---|
| 1 | Dämpfventil | 61 | zweite Teilventil |
| 3 | Schwingungsdämpfer | 63 | zweiter Voröffnungsquerschnitt |
| 5 | Kolbenstange | 65 | dritter Strömungskanal |
| 7 | Dämpfventilkörper | 67 | Einzelventilstange |
| 9 | Strömungskanal | 69 | Verbindungshülse |
| 11 | Strömungskanal | 71 | Gewindeverbindung |
| 13 | kolbenstangenseitiger Arbeitsraum | 73 | Federanordnung |
| 15 | kolbenstangenferner Arbeitsraum | 75 | Stützscheibe |
| 17 | Zylinder | 77 | Aufnahmeöffnung |
| 19 | Ventilstange | 79 | Bolzenabschnitt |
| 21 | Ventilstange | | |
| 23 | Ventilscheibe | | |
| 25 | Ventilscheibe | | |
| 27 | Ventilsitzfläche | | |
| 29 | Ventilsitzfläche | | |
| 31 | Hauptdämpfventil | | |
| 33 | Hauptdämpfventil | | |
| 35 | Kopf der Ventilstange | | |
| 37 | Kopf der Ventilstange | | |
| 39 | Schließfeder | | |
| 41 | Schließfeder | | |
| 43 | Voröffnungsventil | | |
| 45 | Ventilstange | | |
| 47 | Ventilscheibe | | |
| 49 | erste Ventilsitzfläche | | |
| 51 | weitere Ventilscheibe | | |
| 53 | zweite Ventilsitzfläche | | |
| 55 | Anfangsspalt | | |
| 57 | erstes Teilventil | | |
| 59 | erster Voröffnungsquerschnitt | | |

## Patentansprüche

1. Dämpfventil (1), umfassend einen Dämpfventilkörper (7) mit mindestens einem Strömungskanal (65) für Dämpfmedium, wobei in dem Strömungskanal (65) eine Ventilstange (45) angeordnet ist, die mit einer Ventilscheibe (47; 51) und einer Ventilsitzfläche (49; 53) des Dämpfventilkörpers (7) zusammenwirkt, **dadurch gekennzeichnet, dass** die Ventilstange (45) eine weitere Ventilscheibe (47; 51) trägt, die mit einer zweiten Ventilsitzfläche (49; 53) des Dämpfventilkörpers (7) zusammenwirkt, wobei die erste Ventilscheibe (47) mit der ersten Ventilsitzfläche (49) ein erstes Teilventil (57) mit einem ersten permanent offenen Voröffnungsquerschnitt (59) und die zweite Ventilscheibe (51) mit der zweiten Ventilsitzfläche (53) ein zweites Teilventil (61) mit einem zweiten permanent offenen Voröffnungsquerschnitt (63) ein Wechselventil bilden, wobei das Dämpfmedium über den Voröffnungsquerschnitt (59) in den Strömungskanal (65) einfließt, das eine Teilventil (57) schließt und das andere Teilventil (61) öffnet und das Dämpfmedium bei entgegengesetzter Strömungsrichtung das Teilventil (61) schließt, über den Voröffnungsquerschnitt (63) in den Strömungskanal (65) einströmt und das andere Teilventil (57) öffnet.

2. Dämpfventil nach Anspruch 1, **dadurch gekennzeichnet, dass** die Ventilstange (45) axial teilbar ausgeführt ist.

3. Dämpfventil nach Anspruch 2, **dadurch gekennzeichnet, dass** zwei Ventilstangen (67) mittels einer Verbindungshülse (69) miteinander verbunden sind.

4. Dämpfventil nach Anspruch 3, **dadurch gekennzeichnet, dass** die Verbindungshülse (69) innerhalb des Strömungskanals (45) fixiert ist.

5. Dämpfventil nach Anspruch 2, **dadurch gekennzeichnet, dass** die Ventilstangen (67) über eine Gewindeverbindung (71) miteinander verbunden sind.

6. Dämpfventil nach Anspruch 2, **dadurch gekennzeichnet**, die Ventilstangen (67) über eine Presspassung (77; 79) miteinander verbunden sind.

7. Dämpfventil nach Anspruch 1, **dadurch gekennzeichnet, dass** die Ventilstange (45) von einer Federanordnung (73) in eine Ausgangsstellung zu den beiden Ventilsitzfläche (49; 53) positioniert wird.

## Claims

1. Damping valve (1), comprising a damping valve body (7) with at least one flow passage (65) for damping medium, wherein a valve rod (45) interacting with a valve disc (47; 51) and a valve seat surface (49; 53) of the damping valve body (7) is arranged in the flow passage (65), **characterized in that** the valve rod (45) bears a further valve disc (47; 51) which interacts with a second valve seat surface (49; 53) of the damping valve body (7), wherein the first valve disc (47) together with the first valve seat surface (49) forms a first partial valve (57) with a first permanently open pre-opening cross section (59), and the second valve disc (51) together with the second valve seat surface (53) forms a second partial valve (61) with a second permanently open pre-opening cross section (63), forming a shuttle valve, wherein the damping medium flows via the pre-opening cross section (59) into the flow passage (65), closes the one partial valve (57) and opens the other partial valve (61), and, in the event of an opposite direction of flow, the damping medium closes the partial valve (61), flows via the pre-opening cross section (63) into the flow passage (65) and opens the other partial valve (57).

2. Damping valve according to Claim 1, **characterized in that** the valve rod (45) is designed to be able to be divided axially.

3. Damping valve according to Claim 2, **characterized in that** two valve rods (67) are connected to each other by means of a connecting sleeve (69).

4. Damping valve according to Claim 3, **characterized in that** the connecting sleeve (69) is fixed within the flow passage (65).

5. Damping valve according to Claim 2, **characterized in that** the valve rods (67) are connected to each other via a threaded connection (71).

6. Damping valve according to Claim 2, **characterized in that** the valve rods (67) are connected to each other via a press-fit (77; 79).

7. Damping valve according to Claim 1, **characterized in that** the valve rod (45) is positioned by a spring arrangement (73) into a starting position with respect to the two valve seat surfaces (49; 53).

## Revendications

1. Soupape d'amortissement (1), comprenant un corps de soupape d'amortissement (7) pourvu d'au moins un conduit d'écoulement (65) pour un milieu d'amortissement, dans laquelle une tige de soupape (45) coopérant avec un disque de soupape (47 ; 51) et une surface de siège de soupape (49 ; 53) du corps de soupape d'amortissement (7) est disposée dans le conduit d'écoulement (65), **caractérisée en ce que** la tige de soupape (45) supporte un disque de soupape supplémentaire (47 ; 51) qui coopère avec une deuxième surface de siège de soupape (49 ; 53) du corps de soupape d'amortissement (7), dans laquelle le premier disque de soupape (47) forme avec la première surface de siège de soupape (49) une première soupape partielle (57) ayant une première section transversale d'ouverture avancée (59) ouverte en permanence, et le deuxième disque de soupape (51) forme avec la deuxième surface de siège de soupape (53) une deuxième soupape partielle (61) ayant une deuxième section transversale d'ouverture avancée (63) ouverte en permanence, formant une soupape à deux voies, dans laquelle le milieu d'amortissement entre dans le conduit d'écoulement (65) à travers la section transversale d'ouverture avancée (59), ferme ladite une soupape partielle (57) et ouvre ladite autre soupape partielle (61), en cas de sens d'écoulement opposé, le milieu d'amortissement ferme la soupape partielle (61), entre à travers la section transversale d'ouverture avancée (63) dans le conduit d'écoulement (65) et ouvre l'autre soupape partielle (57) .

2. Soupape d'amortissement selon la revendication 1, **caractérisée en ce que** la tige de soupape (45) est réalisée de manière divisible axialement.

3. Soupape d'amortissement selon la revendication 2, **caractérisée en ce que** deux tiges de soupape (67) sont reliées l'une à l'autre au moyen d'une douille de raccordement (69).

4. Soupape d'amortissement selon la revendication 3, **caractérisée en ce que** la douille de raccordement (69) est fixée à l'intérieur du conduit d'écoulement (65).

5. Soupape d'amortissement selon la revendication 2, **caractérisée en ce que** les tiges de soupape (67) sont reliées l'une à l'autre par un assemblage par filetage (71) .

6. Soupape d'amortissement selon la revendication 2, **caractérisée en ce que** les tiges de soupape (67) sont reliées l'une à l'autre par ajustage serré (77 ; 79).

7. Soupape d'amortissement selon la revendication 1, **caractérisée en ce que** la tige de soupape (45) est positionnée par un agencement de ressort (73) dans une position de départ par rapport aux deux surfaces de siège de soupape (49 ; 53).
